# EUROPEAN PATENT APPLICATION

(11) **EP 4 459 635 A2**
(43) Date of publication of application: **06.11.2024**
(21) Application number: 24188527.6
(22) Date of filing: 23.12.2021
(51) Int. Cl.: G21C 7/117

(54) **FUEL ASSEMBLY FOR A NUCLEAR POWER PLANT, METHOD FOR ACTIVATING A MATERIAL TO BE ACTIVATED AND GRIPPER**

(62) Divisional of application: 21847498.9
(71) Applicant: FRAMATOME, 92400 Courbevoie (FR)
(72) Inventor: VOLLMER, Nico, 91301 FORCHHEIM (DE); WIESE, Thomas Heinz, 91301 FORCHHEIM (DE)
(74) Representative: Lavoix

(57) **Abstract**

The present invention relates to a gripper for pulling out one or more elements out of a hollow rod of a fuel assembly (1), the gripper comprising:
a tube (62, 120) with a distal end (64, 124) and a proximal end (66, 122), wherein the proximal end (66, 122) is adapted to be connected to a manipulator arm, wherein the distal end (64, 124) comprises an opening area (128) forming a plane (D) being oblique with respect to a plane (P) orthogonal to the longitudinal axis (Y) of the tube (62, 120), wherein
the tube (62, 120) is further provided with at least one rectilinear slit extending in longitudinal direction of the tube (62, 120).

## Description

The present invention concerns a fuel assembly for a nuclear power plant, the fuel assembly comprising at least one hollow rod, the hollow rod being a control rod guide tube of the fuel assembly for the control rod assembly or an instrumentation tube, each hollow rod is adapted to be filled with one or more containers filled with material to be activated.

Further, the present invention concerns a method for neutron or gamma irradiation of a specimen (called activating) a material to be activated.

There is a need for isotopes worldwide. Experimental and research reactors can only produce a small quantity of isotopes, further more most of them are old and will reach the end of their lifetime soon.

CN112117021 A discloses a system for radionuclide production, in particular high-quality carbon. A plurality of target tubes are arranged in the target rod, the target tubes are sequentially arranged in series along the axis of the target rod.

CN 105 244 069 A relates to a system comprising a hollow cladding tube comprising a plurality of targets.

EP 2 120 241 B1 discloses a fuel rod assembly comprising at least one irradiation target retention device, adapted to fit into a nuclear fuel rod
Object of the invention, is to provide alternative means for irradiating targets in a pressurized water reactor.

According to one aspect, a fuel assembly for a nuclear power plant is provided, the fuel assembly comprising at least one hollow rod, the hollow rod being a control rod guide tube of the fuel assembly for the control rod assembly or an instrumentation tube, each rod is adapted to be filled with one or more containers filled with material to be activated, wherein the fuel assembly further comprises a damping element at the lower end of the hollow rod.

Further embodiments may relate to one or more of the following features, which may be combined in any technical feasible combination:
- the hollow rod is closed by a finger of a flow restrictor at a top end of the hollow rod;
- the damping element is adjacent to a bottom of the hollow rod;
- one or more second damping elements are provided, in particular at the top of the one or more containers and/or between two adjacent containers;
- the damping element is a mechanical damping element in particular a helical spring, a leaf spring and/or a group of disc springs;
- the damping element is hollow, wherein, in particular, the damping element has an opening extending along the longitudinal axis of the hollow rod;
- the hollow rod has an opening at its bottom, wherein in particular the opening of the bottom of the hollow rod is aligned with the opening of the damping element;
- the fuel assembly further comprises the one or more containers with the material to be activated, wherein a gap is provided between the material to be activated and the inner surface of the container;
- the material to be activated has a hollow body;
- the material to be activated is sintered, casted and/or alloyed;
- the outer shape of the material to be activated has a star-shape in a plane orthogonal to the longitudinal axis of the container;
- the material to be activated is Cobalt, Strontium-90 and/or Iodine; and/or
- the hollow rod is perforated at its circumference;
- the fuel assembly further comprises at least one intermediate element, the intermediate element having an outer diameter being greater than the diameter of the one or more containers, wherein the at least one intermediate element is arranged between two adjacent containers and/or wherein at least one intermediate element is arrangement between the damping element and the closest container towards the damping element;
- the fuel assembly comprises at least two groups of containers, wherein at least one group of containers is arranged between two intermediate elements; wherein each group of containers comprises a plurality of containers; and/or
- the damping element, in particular an upper end, of the damping element, has an outer diameter being greater or smaller than the external diameter of the one or more containers.

According to another aspect, a method is provided for activating a material to be activated in a nuclear reactor, comprising the following steps
- providing a fuel assembly for a nuclear power plant, the fuel assembly comprising at least one hollow rod, the hollow rod being a control rod guide tube of the fuel assembly for the control rod assembly or an instrumentation tube;
- providing a plurality of containers with material to be activated;
- inserting one or more damping elements into the hollow rod;
- inserting one or more containers with material to be activated into the hollow rod;
- closing the hollow rod at its upper end;
- loading the fuel assembly into a nuclear reactor vessel; and
- operating the nuclear reactor for a predetermined time

Further embodiments may relate to one or more of the following features, which may be combined in any technical feasible combination:
- the containers are filled into the hollow rod one after the other independently from each other;
- the method further comprises inserting into the hollow rod at least one intermediate element, the intermediate element having an outer diameter being greater or smaller than the diameter of the one or more containers, wherein the at least one intermediate element is inserted between two containers and/or wherein at least one intermediate element is inserted before the first container;
- between two intermediate elements a plurality of containers is inserted into the hollow rod; and/or
- the method further comprises removing the fuel assembles from the nuclear reactor vessel; and discharging the containers from the hollow rod by pushing the containers out of the hollow rod, turning the fuel assembly upside down, and/or by using a gripper, wherein, in particular, the gripper attaches to one of the intermediate elements and/or the damping element in order to pull out of the hollow rod the containers arranged above the intermediate element or damping element to which the gripper is attached; and/or
- the gripper attaches to the intermediate elements by a friction fit, wherein in particular, when the gripper is inserted in the hollow rod the gripper is rotated about its longitudinal axis Y.

According to another aspect, a gripper is provided for pulling out one or more elements out of a hollow rod of a fuel assembly, the gripper comprising:
a tube with a distal end and a proximal end, wherein the proximal end is adapted to be connected to a manipulator arm, wherein the distal end comprises an opening area forming a plane being oblique with respect to a plane orthogonal to the longitudinal axis of the tube, wherein the tube is further provided with at least one rectilinear slit extending in longitudinal direction of the tube.

Further embodiments may relate to one or more of the following features, which may be combined in any technical feasible combination:
- the gripper further comprises a pusher, the pusher being arranged within the tube and movable along the longitudinal axis of the tube, wherein the pusher is adapted to release the elements by pushing them out of the distal end of the tube;
- the at least one slit extends from the opening area, in particular from a position at the opening area that is the closest to the proximal end of the tube;
- the wherein the slit has a length of between 5mm to 200mm, in particular between 20mm and 80mm, for example about 40mm; and/or
- the opening area at the distal end forming the plane has an angle α of between 10 and 60 degrees with respect to the plane orthogonal to the longitudinal axis of the tube, in particular between 12 and 18 degrees.

According to another aspect, a gripper is method provided for pulling out one or more elements out of a hollow rod of a fuel assembly with a gripper according to one of the embodiments disclosed herein, the method comprising:
inserting the gripper into the hollow rod comprising the one or more elements; rotating the gripper about its longitudinal axis, in particular when the gripper hits one of the one or more elements; and
pulling the gripper out of the hollow rod.

Further embodiments may relate to one or more of the following features, which may be combined in any technical feasible combination:
- Method for pulling out one or more elements according to claim 28, wherein the gripper is rotated about its longitudinal axis Y, in particular when the gripper hits the lowest one of the one or more elements.
- Method for pulling out one or more elements according to claim 28, further comprising pushing the one or more elements out of the gripper by a pusher being arranged within the tube of the gripper.

Further advantages, features, aspects and details are evident from the dependent claims, the description and the drawings.

The accompanying drawings relate to embodiments of the invention and are described in the following:
Fig. 1 shows schematically a perspective view of a fuel assembly for a nuclear power plant;
Fig. 2 shows a side view of a flow restrictor;
Fig. 3 shows a top view of the device of the flow restrictor of Figure 2;
Fig. 4 shows schematically a cross section of a fuel assembly;
Fig. 5 shows schematically an embodiment a rod of a fuel assembly;
Fig. 6 shows schematically another embodiment of a rod of a fuel assembly;
Fig. 7 shows schematically a container;
Fig. 8 shows a flow chart of a method according to an embodiment;
Fig. 9 shows schematically a gripper according to an embodiment;
Fig. 10 shows schematically a gripper, which is inserted into a hollow rod;
Figs. 11a - h shows schematically the discharging of a hollow rod with a gripper; and
Figs 12a and 12b show a further embodiment of a gripper.

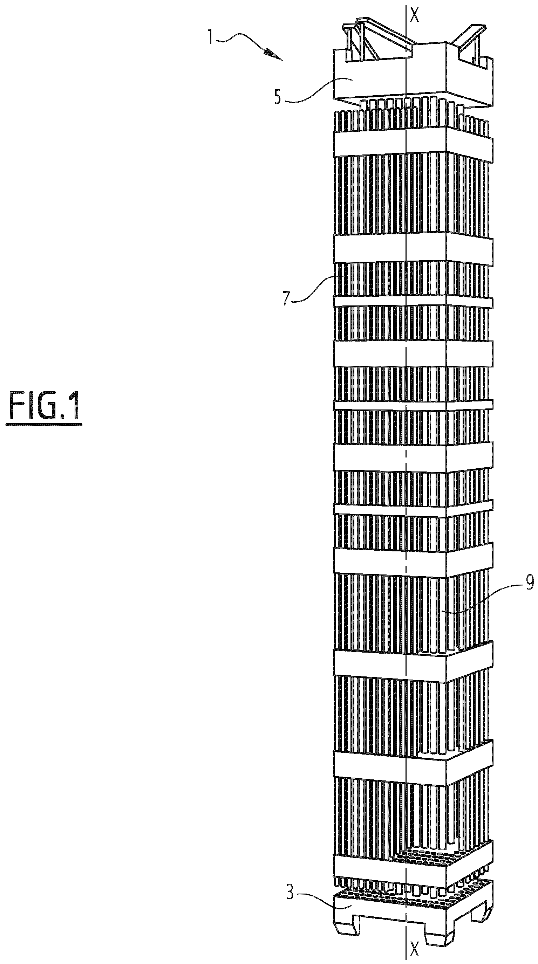

Fig. 1 shows schematically a perspective view of a fuel assembly 1 for a nuclear power plant. The nuclear power plant is used for generating electricity in which as a heat source a nuclear reactor is used. The nuclear power plant includes a nuclear reactor vessel in which a plurality of fuel assemblies 1 are arranged. The plurality of fuel assemblies represent the reactor core of the nuclear power plant. For example between 100 and 300 fuel assemblies are arranged in a nuclear reactor vessel of a PWR (pressurized water reactor)Nuclear reactor vessels of BWRs (boiling water reactors) include up to 1000 fuel assemblies and SMR (small modular reactors) include less than 100 fuel assemblies.

The term "lower" "upper" "top" "bottom" are used with respect to the usual arrangement of a fuel assembly 1 within the reactor of a nuclear power plant, as shown in Figure 1. In special cases the fuel assemblies can be horizontally arranged, that means the geometry would be rotated by 90°.

Further, a primary cooling e.g. by water circuit is connected to the nuclear reactor vessel, which transports the heat generated by the fuel assemblies 1 during operation to a heat exchanger and/or to a turbine. There are several types of nuclear power plants, in particular pressurized water reactors and boiling water reactors.

The fuel assembly 1 has a longitudinal axis X, in which the fuel assembly 1 extends.

The fuel assembly 1 shown in figure 1 is used to group a plurality of fuel rods. The fuel assembly 1 has, in a plane orthogonal to the longitudinal axis X a substantial rectangular shape. According to embodiments, a fuel assembly 1 has a typical length between 2 m and 6 m. In other embodiments, the fuel assembly may have also other shapes a plane orthogonal to the longitudinal axis X, for example hexagonal shapes.

In some embodiments, the fuel assembly 1 comprises a bottom end piece 3. For example, the bottom end piece forms a plurality of nozzles. The nozzles are provided to distribute the fluid flow in a regular manner.

Further, the fuel assembly 1 includes a top end piece 5. The top end piece 5 is provided to carry the fuel assembly 1. Further, the top end piece 5 can act as a plurality of nozzles for the cooling fluid of the primary cooling water circuit.

For example, a fuel assembly 1 includes plurality fuels rods 7, which extend in parallel to the longitudinal axis. The fuel rods 7 are spaced in a regular pattern. In the embodiment shown in Figure 1, the fuel rods 7 are arranged in a pattern 17x17. In other embodiments, the fuel assembly 1 may include fuel rods 7 in a pattern of e.g. 14 x 14. The fuel rods may have, from the top view, a square shape or a hexagonal shape.

The fuel assembly 1 further includes one or more control rod guide tubes 9 for control rods. The control rod guide tubes 9 for the control rods are provided at specific positions within the fuel assembly 1. The control rod guide tubes 9 extend in parallel to the longitudinal axis X. For example, a fuel assembly may have between 10 and 30 control rod guide tubes 9.

The control rod guide tubes 9 are fixed to the bottom end piece 3 and the top end piece 5.

The control rod guide tubes 9, together with the top end piece 5 and the bottom end piece 3 and some distance pieces the skeleton of the fuel assembly 1. The fuel rods 7 are hold by the distance pieces. For example, the distance pieces can include some spring elements for holding the fuel rods 7. Further, also the top end piece can include the springs in order to hold down the fuel assembly, as during the operation of the nuclear power plant the water flow in the upward direction is rather strong.

If control rods are inserted into the control rod guide tubes 9 of the fuel assembly 1, these control rods are moved together. These control rods are therefore arranged in a rod cluster control assembly (RCCA).

Not all fuel assemblies are provided with a RCCA. Some fuel assemblies have a Rod Cluster Control Assembly (RCCA) and some not. In the following, the Rod Cluster Control Assembly is also called control rod assembly.

All the fuel assemblies in the nuclear core should have similar thermohydraulic properties. For control rod guide tubes 9 not used for control rods, the control rod guide tubes 9 can temporary plugged by a so called flow restrictor as it will be explained here below. By this, the thermohydraulic properties in all guide tubes are similar.

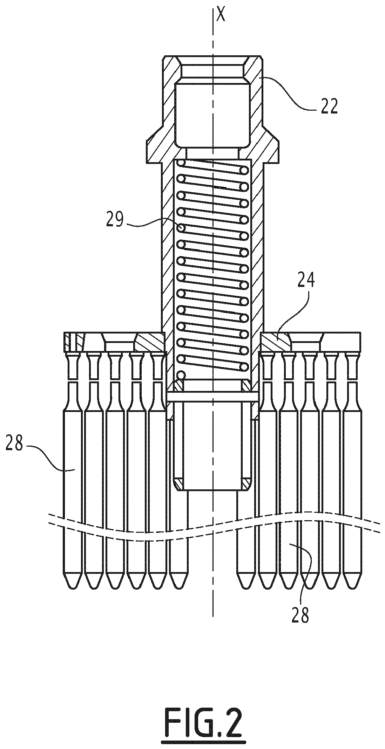

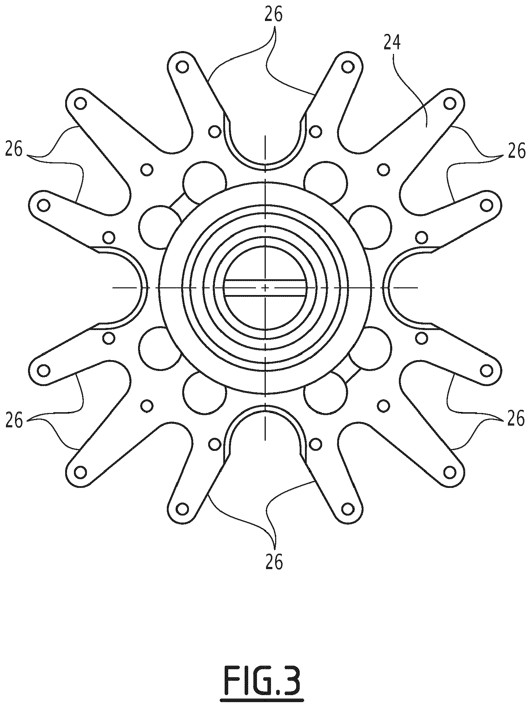

Figure 2 shows in a sectional side view an embodiment of a flow restrictor 20 for a fuel assembly 1 of a nuclear power plant. Figure 3 shows a top view of the flow restrictor 20. The flow restrictor 20 includes at its upper end a coupling piece 22. The coupling piece 22 is provided in order to move the flow restrictor 20 into and out of the fuel assembly 1. The device 20 has the similar longitudinal axis X as the fuel assembly 1.

Further, the device 20 includes a plate 24 forming a plurality of arms 26. The arms are rigidly connected to the coupling piece 22. From each arm 26, one or more fingers 28 extend in parallel to the longitudinal axis X. For example, two fingers 28 extend from each arm 26 in parallel to the longitudinal axis X. The number of fingers depend on the design of the fuel assembly 1. For example, the device 20 may include between 15 and 30 fingers. The lower side of the plate 24 is provided to be placed on the top end piece 5 of the fuel assembly 1. The fingers extend through the top end piece 5 into the control rod guide tubes 9. In other words, the length of the fingers 28 depend on the dimensions of the fuel assembly 1.

For example, in an embodiment, the fingers have a length of at least 20 cm.

According to an embodiment, the fingers 28 have a length adapted to extend at least 15 cm into a control rod guide tube 9, when the device 20 is fully inserted into the fuel assembly 1. In an example, the fingers have a lengths adapted to extend 25 cm into the control rod guide tubes 9, when the device 20 is fully inserted into the fuel assembly 1. Under fully inserted it is meant that the plate 24 is positioned on the top end piece 5 of the fuel assembly. In such a case, the device 20 is not able to move forward further downward. According to embodiments, the device is hold down by a spring 29 to ensure that it does not move during operation of the nuclear reactor. By this, it blocks coolant flow.

The plurality of arms 26, and in particular the coupling piece 22 and/or the fingers 28 form a flow restrictor in order to (hydraulically) simulate a missing RCCA. According to embodiments, the flow restrictor has the shape of a control rod assembly upper portion. The flow restrictor, in particular the coupling piece 22, the fingers 28 and/or the arms 26 are made of zirconium or stainless steel or equivalent material allowed for reactor operation.

In an embodiment, the coupling piece 22 includes a spring 29. The spring 29 is provided to fix the device 20 within the fuel assembly 1.

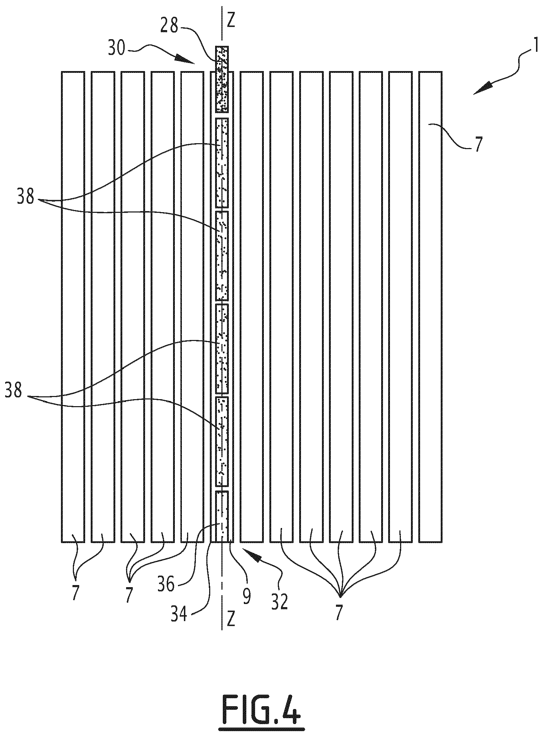

Fig. 4 shows schematically a cross section of a fuel assembly 1 according to an embodiment. The same elements are designated with same reference numbers as in the previous figures. In Fig. 4 only a single control rod guide tubes 9 is shown, however as shown with respect to Figure 1, a fuel assembly may include more control rod guide tubes 9.

The control rod guide tube 9 has an upper end 30 and a lower end 32. At the lower end 32 is the bottom 34 of the control rod guide tube 9.

The top of the control rod guide tube 9 is closed by a finger 28, in particular during the operation of the nuclear reactor, which extends into the control rod guide tubes 9. A damping element 36 is arranged at the bottom 34 of the control rod guide tube 9.

Between the damping element 36 and the fingers 28 of the flow restrictor a plurality of containers 38 are arranged within the control rod guide tube 9. The containers 38 are not fixed or connected with respect to each other. For example, the containers 38 could be inserted one after the other or independently from each other into the control rod guide tube 9. Further, the containers 38 can move freely within the control rod guide tube 9. In some embodiments, as discussed below, two or more containers may be grouped.

The containers 38 contain a material to be activated. The material to be activated within the container 38 may be in a solid, liquid or gaseous state or an intermediate state.

For example, the material to be activated is Cobalt (Co), Strontium-90 (as fission product from U-235), Iodine, etc..

The material to be activated can be a pure material or a blend of materials. For example, aluminum can be used as a blend material. In case of solid state material, the material can be solid, hollow material, sintered material or powder. In some embodiments, the material to be activated may be stacked with fill material, in order to control the activation process of the material to be activated.

According to embodiments, the containers 38 have a length of between 5cm and 80cm, in particular between 10cm and 50cm.

The damping element 36 is in particular adapted to compensate the swelling of the containers 38 due to temperature and/or radiation or gaseous release.

Alternatively, instead of or additionally to the control rod guide tubes 9 an instrumentation tube may be used for filling therein the containers 38. Such instrumentation tubes also extend in parallel to the longitudinal axis X within the fuel assembly 1. A fuel assembly has for example between up to 5 instrumentation tubes, in particular up to 3 instrumentation tubes. The instrumentation tubes may have approximately the same lengths as the control rod guide tubes. They are provided in the fuel assembly 1 for guiding instrumentation fingers in the reactor core.

The control rod guide tubes and/or instrumentation tubes are fixed to the fuel assembly 1.

In the following, the control rod guide tubes or the instrumentation tube may be also commonly denominated as hollow rod.

The control rod guide tubes 9 and/or the instrumentation guide tubes have an inner diameter of between 0,4 cm and 5 cm (for Combustion Engineering types), in particular about 1 cm. The length of the control rod guide tubes 9 and/or the instrumentation guide tubes depend on the length of the fuel assembly 1. For example, the control rod guide tubes 9 and/or the instrumentation guide tubes have a length of between 2m and 6m, in particular between 3m and 5m. In an embodiment, the control rod guide tubes 9 and/or the instrumentation guide tubes hare made of a stainless steel or a Zirconium alloy. Also, other suitable materials may be used.

The containers 38 have an external diameter, which is smaller than the internal diameter of the control rod guide tubes 9 and/or the instrumentation guide tubes. For example, the external diameter of the containers 38 have an external diameter, which is 2mm smaller than the internal diameter of the control rod guide tubes 9 and/or the instrumentation guide tubes. The smaller diameter is required for thermal expansion or growth due to irradiation. Thus, the containers 38 are able move freely for extracting them out of the hollow rod.

The damping element 36 may have different forms. For example, it may be mechanical damping element damping element. The damping element is provided to reduce the damage of the containers 38, when these fall into the control rod guide tubes 9 and/or the instrumentation guide tubes. Further, the damping element enable that the containers remain at their place and reduces the vibration of the containers 38. According to embodiments, the damping element 36 is not fixed to the control rod guide tube or an instrumentation guide tube. In other words, it could freely move within the hollow rod, in particular the control rod guide tube or the instrumentation guide tube. In an embodiment, which may be combined with other embodiments disclosed herein, the damping element can be attached to the lowest container. In some embodiments, which may be combined with other embodiments disclosed herein, one or more additional damping elements can be provided inside the guide tubes 9 and/or instrumentation tube at the uppermost end and/or in between the containers. For example, a damping element may be provided between the container 38 closest to the finger 28 and the finger 28 of the flow restrictor 20.

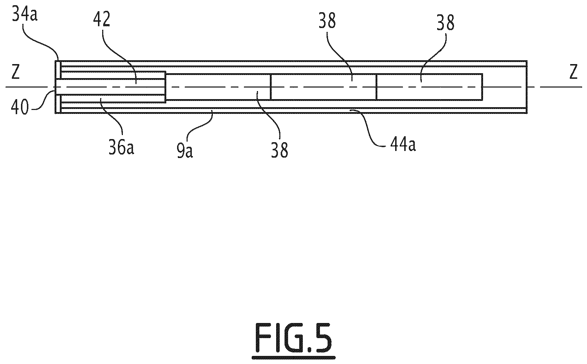

Fig. 5 shows schematically an embodiment of a hollow rod 9a of a fuel assembly. The rod 9a may be a control rod guide tube or an instrumentation guide tube.

The hollow rod 9a has an opening 40 at the bottom 34a. Additionally or alternatively, the hollow rod is perforated at its circumference 44a. The opening and/or perforations enable a sufficient heat dissipation and/or moderation (neutron physical reasons). The number, size and position of the perforations and/or openings depend on the required heat dissipation and/or moderation. The size and or position of the opening is selected such that the damping element and/or the containers cannot pass through the opening.

Figure 5 shows an embodiment of a damping element 36a, which as an opening 42 extending therethrough. Thus, the fluid in the nuclear reactor can pass into the rod 9a.

According to embodiments, the damping element can be made out of stainless steel (e.g. as spring), zirconium or an alloy of it. In some embodiments, other materials may be used.

According to an embodiment the damping element 36a is a spring, in particular a helical spring. In some embodiments, the damping element 36a is a leaf spring or a group of disc springs or Belleville washers.

In an embodiment, the opening 40 at the bottom of the rod 9a and the opening 42 of the damping element 36a may be used for pushing the containers 38 out of the rod 9. In particular, the opening 40 at the bottom of the rod 9a and the opening 42 of the damping element 36a are aligned to each other in direction of the longitudinal axis Z of the hollow rod 9.

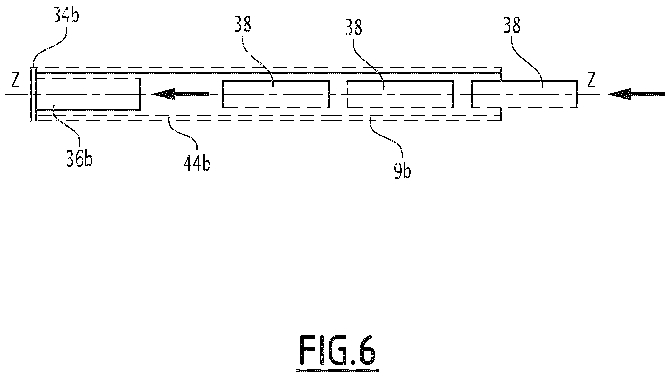

Fig. 6 shows schematically another embodiment of a hollow rod 9b of a fuel assembly. The hollow rod 9b may be a control rod guide tube or an instrumentation guide tube. In this embodiment, the bottom 34b is closed. In some embodiments, the hollow rod 9b is perforated at its circumference 44b. The perforations enable a sufficient heat dissipation and/or moderation (neutron physical reasons). The number, size and position of the perforations depend on the required heat dissipation and/or moderation. At the bottom 34b of the rod 9b, the damping element 36b is arranged. According to embodiments, the damping element can be made out of stainless steel (e.g. as spring), zirconium or an alloy of it. In some embodiments, other suitable materials may be used.

According to an embodiment the damping element 36b is a spring, in particular a helical spring. In some embodiments, the damping element 36a is a leaf spring or a group of disc springs or Belleville washers.

In some embodiments, additional damping elements are provided between the containers 38 and/or between the closest container 38 to the finger and the respective finger 28 of the flow restrictor 20. However, the additional damping elements are not fixed to the flow restrictor 20, in particular during operation of the nuclear power plant. In other words, the additional damping elements could move freely within the control rod guide tube or the instrumentation guide tube.

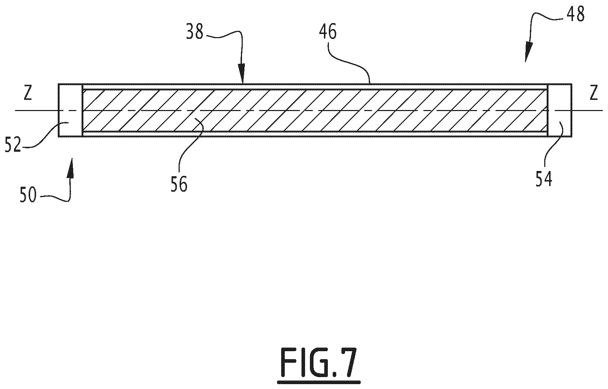

Figure 7 shows an example of a container 38. In an embodiment, the container 38 has a cylindrical shape, in particular a circular cylindrical shape. A circular cylindrical shape is a cylinder, which has a circular cross-section. The container 38 comprises in an embodiment an outer tube 46 with two open ends 48, 50 at their axial extremities. The open ends 48, 50 are closed respectively with a cap 52, 54. In another embodiment, in case the outer tube 46 is closed at one end, such that only one end needs to be closed by a cap 52, 54.

For example, the outer tube 46 and the caps 52, 54 are made of metal stainless steel, zirconium or an alloy of stainless steel and zirconium. Alternatively, other suitable materials may be used. According to embodiments, the caps 52, 54 are welded onto the tube 46.

The material to be activated 56 is provided within the container 38.

The material to be activated 56 may have different shapes in order to optimize the radiation. The shape may be selected in order to avoid an outwardly radial extension and/or an extension in axial direction, that means along the longitudinal axis Z, when the container 38 is placed into a tube 9, 9a, 9b. For example, the material to be activated 56 may be perforated, hollow, star-shaped, etc. In case the material to be activated 56 extends strongly under radiation and/or heat or generate gases, the material to be activated 56 may be hollow, in particular to avoid the cracking of the container 38. Alternatively or additionally, the material 56 to be activated may be sintered. This enables that the material 56 to be activated extends to its interior.

In some embodiments, the container 38 may in addition to the material to be activated 56 contain filling gazes, for example argon, krypton, helium or nitrogen.

According to some examples, the container 38 may include one or more springs, supporting tubes or supports in order to fix the material to be activated 56.

In some embodiments, there may be a gap in radial direction between the material to be activated 56 and the outer tube 46 of the container 38, in particular the inner surface of the outer tube 46. Alternatively or additionally they may be a gap in axial direction between the material to be activated 56 an inner surface of the container, for example the caps 52, 54.

The wall thickness of the outer tube 46 may be chosen depending on the material to be activated 56 and in particular depending to the thermal extension. In other embodiments, the size of the container 38 in axial direction (i.e. in the direction of the longitudinal axis Z) depends on the relative thermal dilation of the material to be activated 56 with respect to that of the container 38.

In other embodiments, the heat dissipation of the material to be activated 56 has to be optimized in order to avoid destruction of the material to be activated 56. For example by reducing the gap between the control rod guide tubes 9 and/or the instrumentation guide tubes and the outer surface of the tube 46 of the container 38, by pressing the material to be activated 56 into the container 38, by welding the material to be activated 56 into the outer tube 46 of the container 38, or by filling a liquid material to be activated 56 in to the container 38.

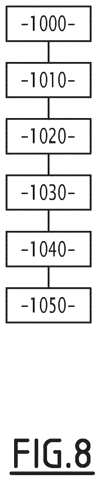

In the following an embodiment of a method according to an embodiment will be explained in conjunction with Figure 8.

In step 1000 the damping element 36 is inserted into the hollow rod, in particular into the control rod guide tube 9 or the instrumentation tube. The damping element 36 can be inserted during the manufacturing of the fuel assembly 1. In some embodiments, the damping element 36 is inserted directly before loading the hollow rod with the containers 38, for example in the nuclear power plant. The placement of the damping element shall be done a by a gripping tool.

In step 1010 the containers 38 are charged into the hollow rod 9, in particular the control rod guide tube 9 or the instrumentation tube. This is performed in an example under the water, for example 4 to 5 meters under the water surface. For example, a fuel assembly pool is used for that purpose. Alternatively, the fuel assembly 1 is rotated, such that its longitudinal axis X extends in horizontal direction and the containers 38 are pushed into the hollow rod 9. For example, this is performed using a gripper, a fill tube and/or a drum loader. The containers 38 are inserted one after the other into the hollow rod 9 formed by the control rod guide tube 9 and/or the instrumentation tube. In other words, the containers are filled independently from each other into the hollow rod.

The different containers 38 or not connected to each other. For example, the containers 38 are not screwed or welded together. However, in some embodiments, one or more containers are grouped together. For example, one or more containers, in particular two or three containers, are connected to each other, for example by screwing or clamping.

In some embodiments, which may be combined with other embodiments disclosed herein an intermediate element may be placed between two adjacent containers and/or between the lowest container and the damping element. In an example, the intermediate element may include a damping element or form a damping element.

According to embodiments, the containers 38 within the hollow rod 9, 9a, 9b may include a plurality of intermediate elements being spaced apart from one another by respectively a plurality of containers 38.

According to embodiments, which may be combined with other embodiments disclosed herein, the intermediate elements may have an ratio between the height in direction of the longitudinal axis Z and the diameter in orthogonal direction to the longitudinal axis Z of 1:1 to 10:1, in particular 2:1 to 6:1, for example 4:1. In other words, the height of the intermediate elements is equal or greater than their diameter.

According to embodiments, a flow restrictor 20 is then fixed to the fuel assembly, in particular to close the hollow rod 9, in particular the control rod guide tube 9 or the instrumentation tube at their upper end 30. In an embodiment, only the hollow rods filled with one or more containers are closed by an arm of a flow restrictor.

Then the fuel assembly is loaded in step 1020 into the nuclear reactor vessel. Then, the reactor cycle is started.

For example, the containers 38 remain during the reactor cycle in the nuclear reactor vessel, typically between 12 and 24 months. The radiation can be controlled by the positioning of the containers 38, in particular within the reactor core.

In step 1030, when the reactor cycle is finished, the fuel assemblies 1 are removed from the nuclear reactor vessel and provided into the spent fuel pool. Alternatively, the fuel assemblies 1 are moved to another pool. During the reactor cycle, the material to be activated 56 becomes the activated material 56.

Then, in step 1040, the containers 38 are discharged from the hollow rod, in particular the control rod guide tube 9 or the instrumentation tube. For example, the fuel assembly 1 is turned upside down, such that the containers fall out of the hollow rod 9 and the containers 38 are collected in a vessel. In other words the containers 38 are removed from the tube due to gravity.

In other embodiments, the containers 38 are pushed out of the hollow rod 9, in particular the control rod guide tube 9 and/or the instrumentation guide tube, by a pushing member that extends through the opening 40 at the bottom 34, 34a of the hollow rod, in particular the control rod guide tube 9 or the instrumentation tube, and/or the opening 42 of the damping element.

In addition, in some embodiments, the damping element 36 may slightly push upward the containers 38.

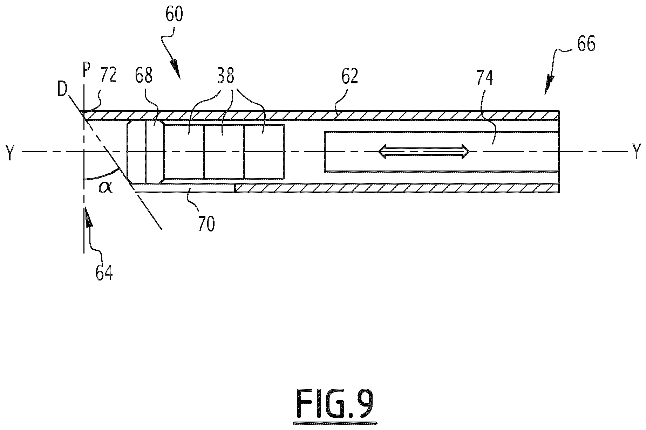

In some embodiments, which may be combined with other embodiments disclosed herein, the containers 38 can be removed using a gripper. Embodiments of such a gripper are shown and explained with respect to Figures 9 to 13.

Subsequently, after the containers have been removed from the control rod guide tube 9 and/or the instrumentation guide tube the activated material 56 is removed from the containers in step 1050.

In order to remove the activated material 56 from the container 38 several procedure may be used. This can only be done by destroying the container 38, in particular when the container is submerged in water.

For example, in case the activated material 56 is not connected with the outer tube 46, one or both caps 52, 54 are cut away. Then, the activated material 56 is pushed out of the container 38 or the container 38 is turned upside down to drop out the activated material 56.

In case the activated material 56 is connected with the outer tube 46, one or both caps are cut away. Then, the outer tube 46 is cut in an axial direction (i.e. parallel to the longitudinal axis Z), and the activated material 56 is pressed away from the outer tube 46. Alternatively, the outer tube 46 is completely removed by a gripper. As another possibility, the activated material 56 is dissolved.

According to embodiments, in case Cobalt is used as material to be activated, several kg of Co-59 as material to be activated 56 can be inserted into a reactor in order to produce Co-60. Further, a post irradiation treatment in a hot cell can be avoided.

Fig. 9 shows a gripper 60 according to an embodiment. The gripper of Figure 9 can be combined with any other embodiment disclosed herein. The gripper 60 comprises a tube 62 with a distal end 64 and a proximal end 66. The proximal end 66 is adapted to be connected to a manipulator arm (not shown).

The distal end 64 is oblique with respect to a plane P orthogonal to the longitudinal axis Y. For example, the distal end forms a plane D, which has an angle α of between 10 and 60 degrees with respect to the plane P orthogonal to the longitudinal axis Y, in particular between 12 and 18 degrees. For example, the plane D has an angle α of about 15 degrees with respect to the plane P.

In operation, the longitudinal axis Y of the gripper or the tube 62 corresponds to the longitudinal axis Z of the hollow rod, which is in parallel to the longitudinal axis X of the fuel assembly 1.

The tube 62, in particular the interior of the tube 62, forms an accommodation space for the elements to be grabbed, for example one or more containers 38 and/or intermediate elements.

The outer diameter of the tube 62 is smaller than the inner diameter of the hollow rod 9, 9a, 9b. For example, the outer diameter of the tube is at least 0,4 mm, for example 0,4mm to 1 mm, smaller than the inner diameter of the hollow rod 9, 9a, 9b.

The inner diameter of the tube 62 is adapted to the outer diameter of the damping element and/or to the outer diameter of the intermediate elements 68. For example, the inner diameter of the tube 62 forms a friction fit with the intermediate elements 68 and/or the damping element 82. Thus, the gripper attaches to the intermediate elements, in particular by the friction fit.

According to embodiments, which may be combined with other embodiments disclosed herein, the intermediate elements 68 have a larger outer diameter than the external diameter of the containers 38, in particular in a plane orthogonal to the longitudinal direction Z.

The tube 62 is provided with a slit 70. The slit extends in parallel to the longitudinal axis Y. The slit 70 has a width of between 0,1 mm and 3mm, in particular 1mm to 2mm, for example about 1,5mm. In embodiments, which may be combined with other embodiments disclosed herein, the slit 70 is rectilinear. The slit 70 is connecting an interior of the tube 62 with an exterior of the tube 62.

In an embodiment, the slit 70 extends from the distal end 64 of the tube 62.

The slit 70 has a length, which depends on the number of containers, which should be taken out of the hollow rod with one move of the gripper. For example, the slit 70 has a length of between 5mm to 200mm, in particular between 20mm and 80mm, for example 40mm.

For example, in an embodiment the at least one slit extends about at least 10 percent of the lengths of the portion of the tube, which forms the accommodation space for the elements to be grabbed. The elements to be grabbed may be formed by one or more containers 38, the intermediate elements, a pedestal and/or the damping element, which should be taken out of the hollow rod with one move of the gripper.

The most furthest point at the distal end 64 in distal direction forms a tip 72. In some embodiments, the slit is 70 extends from the distal end at the opposite site of the tip 72. The slit 70 extends from a position at distal end that is the closest to the proximal end of the tube 62.

According to embodiments, the inner side of the tube 62 at the distal end 64 has a conical shape, which in particular extends outwardly towards the tip 72. This enables a better gripping, in particular of at least one of the elements to be grabbed.

The slit 70 enables a slight extension in diameter of the tube and thus an increased friction between the distal end 64 and at least one of the elements to be grabbed.

Further, the gripper may optionally include a pusher 74. The pusher 74 is arranged within the tube 62 and movable along the longitudinal axis Y of the gripper or the tube 62. The pusher 74 is adapted to push the containers 38, one or more intermediate elements 68, pedestal and/or damping elements 36, 36a, 36b out of the tube 62. In other words, the pusher is adapted to release the elements grabbed by the gripper 60, by pushing them out of the distal end of the tube 62.

The intermediate elements 68 may also include or form a damping element as described above.

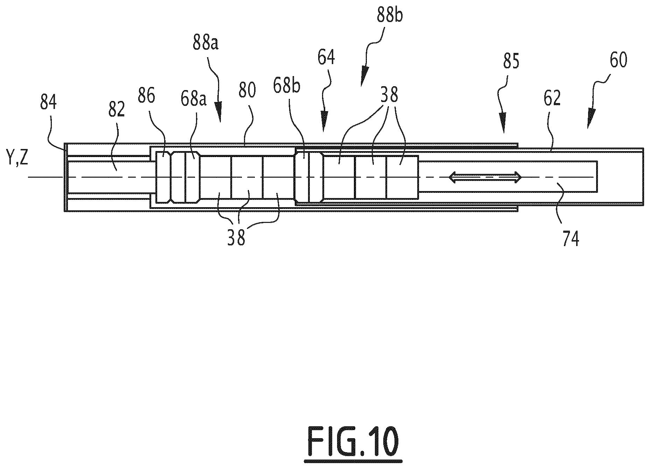

Fig. 10 shows the operation of the gripper 60 according to Figure 9 in operation within a hollow rod 80. The hollow rod 80 has a longitudinal axis with is parallel to the longitudinal axis X of the fuel assembly 1. As it can be seen, a pedestal 82 is arranged in the hollow rod 80. As explained above, the pedestal may be a damping element, for example like the damping elements 36, 36a, 36b. The pedestal or damping element 82 is arranged at the bottom 84 of the hollow rod 80. The hollow rod 80 has further an upper end 85. An upper end 86 of the pedestal or damping element 82 has an outer diameter, which is slightly larger than the inner diameter of the tube 62 as explained with respect to Figure 9, in particular in order to form the friction fit with the tube 62. In that way, the gripper 60 attaches to the pedestal or damping element 82.

On the top of the pedestal or damping element 82, there is arranged a first intermediate element 68a. In some embodiments, the pedestal 82 and the intermediate element 68a form together the damping element 36, 36a, 36b. A plurality of containers 38 forming a group 88a of containers are placed onto the top of the intermediate element 68a. Then, a second intermediate element 68b is placed on the top of the plurality of containers 38, and then a further group 88b of containers 38 follows. The intermediate elements 68a, 68b are spaced apart from one another by the first plurality 88a of containers 38. In Figure 10 three containers 38 are shown as a group 88a, 88b of containers, however, the groups 88a, 88b of containers may include less or even more containers 38, for example 2, 4, 5, 6 or more containers. The containers of each group of containers may be tightly connected to each other, as described above, or they may be independent from each other, i.e. not connected to each other. In such a case, they can move independently from each other.

The gripper 60 is inserted into the hollow rod 80 from the upper end 85 of the hollow rod 80 until the distal end 64 of the tube 62 of the gripper 60 hits the second intermediate element 68b and is connected to that intermediate element 68b with a friction fit. Then, the gripper 60 can move out of the hollow rod 80 and discharge, in particular at a suitable location, the intermediate element 68a and the containers 38 arranged on the top of the intermediate element 68a by moving the pusher 74 towards the distal end 64.

According to embodiments, when the gripper is inserted in the hollow rod 80, in particular when the gripper hits one of the element to be grabbed, in particular the lowest one of the elements to be grabbed, for example an intermediate element, the gripper is rotated about its longitudinal axis Y, until the gripper 60, in particular the distal end 64 of the gripper 60, surrounds the element to be grabbed, in particular intermediate element 68. Then, the friction force holds the intermediate elements from all sides.

In some embodiments, the wall thickness of tube 62 is in the range between the diameter of the hollow rod 80 minus the outer diameter of the intermediate element 68.

According to embodiments, which may be combined with other embodiments disclosed herein, the one or more intermediate elements 68, 68a, 68b are not fixed to the containers 38, damping elements 82 and/or pedestals 82. In other words, the one or more intermediate elements 68, 68a, 68b can be moved independently from the containers, damping elements and/or pedestals into and out of the hollow rod 80.

As the outer diameter of the intermediate elements 68, 68a, 68b is larger than the external diameter of the containers 38, the containers are not damaged, when they are pulled out of the hollow rod 80 with the gripper 60. Further, the containers 38 may be highly contaminated so that a contamination of the gripper 60 is reduced.

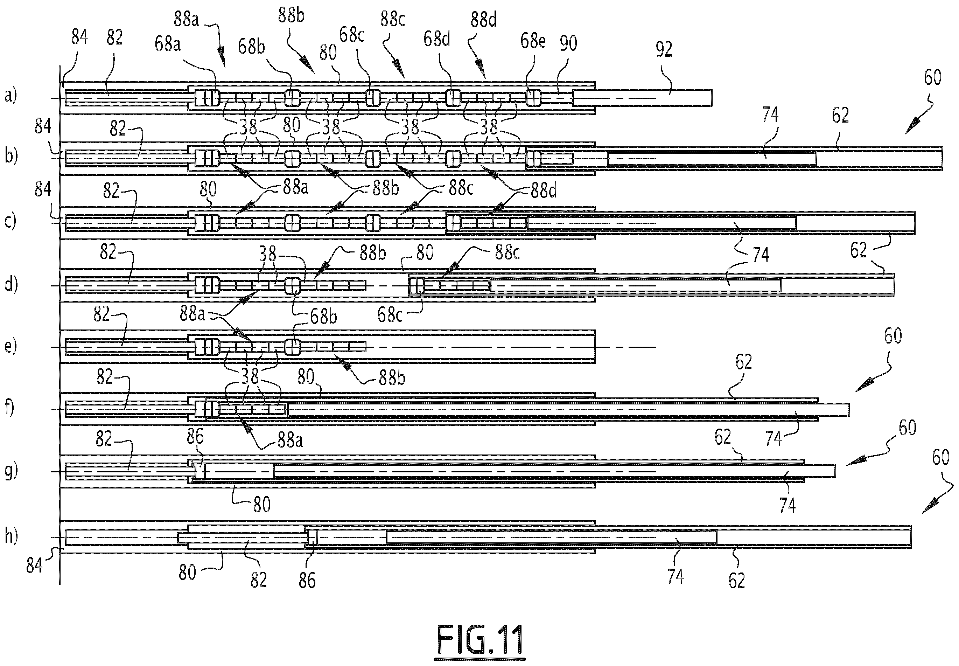

Fig. 11 a to 11h shows an operation of discharging a hollow rod 80.

The same elements are designated with the same reference signs as in Figure 10. As it can be seen from Figure 11a, the hollow rod 80 includes the pedestal or damping element 82, five of intermediate elements 68a to 68e, four groups 88a, 88b, 88c, 88d of containers 38, a top damping element 90 and a finger 92 of a flow restrictor, for example the flow restrictor 20 as described above.

Each group 88a-d of containers 38 comprises four containers. As described above, each group of containers may include more or less containers, for example 2, 3, 5, 6 or more containers. The containers 38 of each group 88a-d of containers may be tightly connected to each other, as described above, or they may be independent from each other, i.e. not connected to each other. The intermediate elements 68a-68e are spaced apart from one another by respectively a group 88a-d of containers 38. Further, there is placed an intermediate element 68a on the top of the pedestal 82 or damping element 82. There is placed optionally an intermediate element 68e on the top of the uppermost container 38. On the uppermost intermediate element 68e the top damping element 90 is arranged. Then, the hollow rod 80 is closed by the finger 92. The uppermost container 38 is the container closest to the finger 92. The uppermost intermediate element 68e is the intermediate element 68e closest to the finger 92. When discharging the containers using a gripper 60, in a first step, the finger 92 is removed, for example by removing the flow restrictor 20.

Then, see Figure 11b, the gripper 60 is inserted into the hollow rod 80 until it hits on the first intermediate element 68e. The distal end 64 of the tube 62 of the gripper 60 is then connected to the intermediate element 68e with a friction fit.

Subsequently, the gripper 60 is pulled out of the hollow rod 80. In an embodiment, the gripper 60 is then moved by a manipulator to a suitable location, where the intermediate element 68e and the top damping element should be discharged.

Then the intermediate element 68e and the top damping element 90 are discharged by moving the pusher 74 towards the distal end 64.

In a further step, see Figure 11c, the gripper 60 is again inserted into the hollow rod 80 until it hits on the intermediate element 68d. The distal end 64 of the tube 62 of the gripper 60 is then connected to the intermediate element 68d with a friction fit. The group 88d of containers is then arranged within the tube 62 of the gripper 60.

Subsequently, the gripper 60 is pulled out of the hollow rod 80. In an embodiment, the gripper 60 is then moved by a manipulator to a suitable location, where the intermediate element 68d and the group 88d of containers should be discharged.

Then the intermediate element 68d and the containers 38 of the group 88d are discharged by moving the pusher 74 towards the distal end 64.

In the next step, see Figure 11d, the intermediate element 68c and the group 88c of containers 38 is removed from the hollow rod 80 in the same manner as the previous group 88d of containers with the intermediate element 68d.

As it can be seen from Figure 11e, the group 88b of containers 38 and the intermediate element 88b is accessible for the gripper 60. Then the group 88b of containers 38 and the intermediate element 88b is pulled out by the gripper 60.

In a subsequent step, see Figure 11f, the intermediate element 68a and the group 88a of containers 38 is removed from the hollow rod 80 in the same manner as the previous groups 88b, 88c, 88d of containers and the intermediate elements 68b, 68c, 68d.

Finally, as it can be seen from Figures 11g and 11h, the gripper 60 is again inserted into the hollow rod 80 until it hits on the pedestal 82, which may form a damping element. The distal end 64 of the tube 62 of the gripper 60 is then connected to the upper end 86 of the pedestal 82 with a friction fit. The upper end 86 is the portion of the pedestal being the closest to the container 38.

Subsequently, the gripper 60 is pulled out of the hollow rod 80. In an embodiment, the gripper 60 is then moved by a manipulator to a suitable location, where the pedestal 82 should be discharged.

Then the pedestal 82 is discharged by moving the pusher 74 towards the distal end 64.

It should be noted that the discharge of the containers with the gripper 60 can be performed when the longitudinal axis of the fuel assembly is vertical or horizontal.

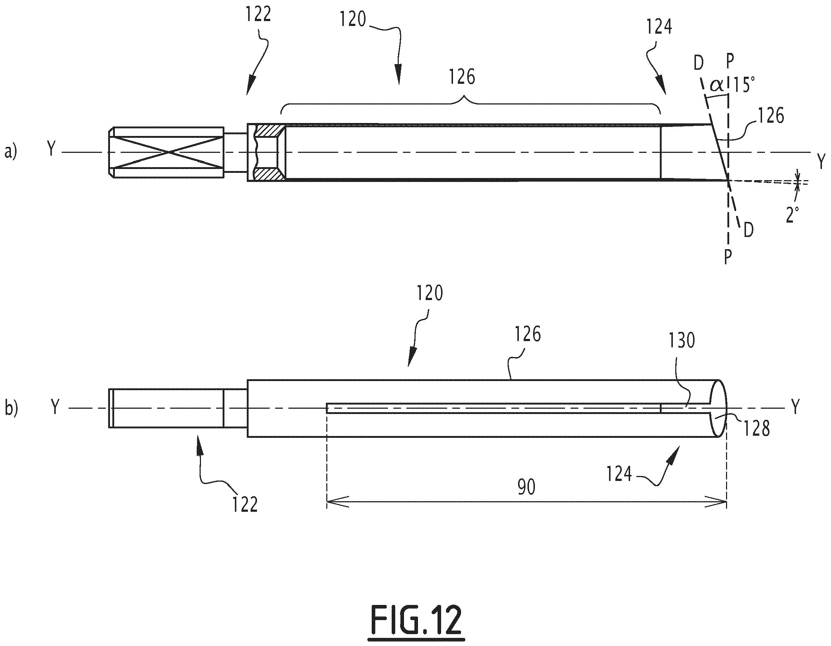

Figure 12a and 12b show another embodiment of a tube 120 or sleeve of gripper. Figure 12a is a longitudinal cross sectional view and Figure 12b is a side view. The tube 120 has a proximal end 122 at which the tube is connected to a manipulator and a distal end 124. For that purpose, the proximal end 122 may be provided with connecting elements. Between the proximal end 122 and the distal end 124 extends an intermediate portion 126 having a substantial constant internal and external diameter. The intermediate portion 126 has a substantial cylindrical shape. According to embodiments, the outer diameter of the intermediate portion 126 and the distal end 124 is substantially constant.

The tube 120, in particular the interior of the tube 120 of the intermediate portion 126, forms an accommodation space for the elements to be grabbed, for example one or more containers 38 and/or intermediate elements.

According to embodiments, which may be combined with other embodiments disclosed herein, the wall thickness of the tube 120 tapers at the distal end 124 towards its distal extremity. In other words, the inner side of the tube 62 at the distal end 64 has a conical shape, which in particular extends outwardly towards the tip, i.e. the most furthest point at the distal end 124 in distal direction.

For example, the tapering may have an angle with respect to the longitudinal axis Y of between 1 degrees and 3 degrees, for example about 2 degrees. The length of the tapering or the cone in direction of the longitudinal axis Y, in particular from the tip, is at least 2mm to 100mm, for example between 10mm and 20mm, in particular about 15mm.

The distal end 124 has an opening area 128, which is oblique with respect to a plane P orthogonal to the longitudinal axis Y. For example, the opening area 128 at the distal end 124 forms a plane D, which has an angle α of between 10 and 20 degrees with respect to the plane P orthogonal to the longitudinal axis Y, in particular between 12 and 18 degrees. For example, the plane D has an angle α of about 15 degrees with respect to the plane P. In operation, the longitudinal axis Y of the gripper or the tube 120 corresponds to the longitudinal axis Z of the hollow rod, which is in parallel to the longitudinal axis X of the fuel assembly 1.

The tube is further provided with a slit 130. The slit 130 extends in parallel to the longitudinal axis Y. The slit 130 has a width of between 1mm and 3mm, for example about 2mm. In some embodiments, the slit 130 has a width of between 0,1mm and 3mm, in particular 1mm to 2mm, for example about 1,5mm.

In embodiments, which may be combined with other embodiments disclosed herein, the slit 130 is rectilinear. The slit 130 is connecting an interior of the tube 120 with an exterior of the tube 120.

In an embodiment, which may be combined with other embodiments disclosed herein, the slit 130 extends from the distal end 124 of the tube 120. For example, the slits extends from the opening area 128 at the distal end.

For example, the slit 130 extends from a position at the opening area 128 that is the closest to the proximal end 122 of the tube 120.

The slit 130 has a length, which depends on the number of containers, which should be taken out of the hollow rod with one move of the gripper. For example, the slit 128 has a length of between 0,5cm to 20cm, in particular between 20mm and 80mm, for example between 3cm and 4cm, for example about 40mm.

The tube 120 is hollow, so that a pusher (not shown) may be moved therein by a respective actuator in the manipulator.

The opening area 114, 128 enables that a cylindrical device, for example one or more containers 38 and/or the intermediate elements 68, 68a, 68b, 68c, 68d, 68e having substantially the same external diameter as the internal diameter of the tube 120 may enter the tube 62, 120 in direction of the longitudinal axis Y.

According to embodiments, which may be combined with other embodiments disclosed herein, the tubes 62, 120 of the gripper and the pusher 74 may be made from stainless steel, zirconium, a zirconium alloy or a combination thereof.

Such a gripper including one of the tubes 62, 120 may carry about 3 Kg.

The present disclosure may also relate to the following embodiments:
Embodiment 1: Fuel assembly (1) for a nuclear power plant, the fuel assembly (1) comprising at least one hollow rod (9, 9a,9b, 80), the hollow rod being a control rod guide tube (9) of the fuel assembly (1) for the control rod assembly or an instrumentation tube, each hollow rod (9, 9a,9b, 80) is adapted to be filled with one or more containers (38) filled with material to be activated, characterized in that the fuel assembly further comprises a damping element (36, 36a, 36b, 82) at the lower end (32) of the hollow rod (9, 9a,9b, 80).
Embodiment 2: Fuel assembly according to embodiment 1, wherein the hollow rod (9, 9a,9b, 80) is closed by a finger (28) of a flow restrictor (20) at a top end (30) of the hollow rod (9, 9a,9b,80).
Embodiment 3: Fuel assembly according to any one of the previous embodiments, wherein the damping element (36, 36a, 36b, 82) is adjacent to a bottom (34, 34a, 34b) of the hollow rod (9, 9a,9b, 80).
Embodiment 4: Fuel assembly according to any one of the previous embodiments, wherein one or more second damping elements are provided, in particular at the top of the one or more containers and/or between two adjacent containers.
Embodiment 5: Fuel assembly according to any one of the previous embodiments, wherein the damping element (36, 36a, 36b, 82) is a mechanical damping element, in particular a helical spring, a leaf spring and/or a group of disc springs.
Embodiment 6: Fuel assembly according to any one of the previous embodiments, wherein the damping element (36, 36a, 36b, 82) is hollow, wherein, in particular, the damping element (36a) has an opening (42) extending along the longitudinal axis (Z) of the hollow rod (9, 9a,9b, 80).
Embodiment 7: Fuel assembly according to any one of the previous embodiments, wherein the hollow rod (9, 9a) has an opening (40) at its bottom (34, 34a), wherein in particular the opening (40) of the bottom (34, 34) of the hollow rod (9, 9a) is aligned with the opening (42) of the damping element (36, 36a).
Embodiment 8: Fuel assembly according to any one of the previous embodiments, further comprising the one or more containers (38) with the material to be activated, wherein a gap is provided between the material to be activated (56) and the inner surface of the container (38).
Embodiment 9: Fuel assembly according to embodiment 8, wherein the material to be activated (56) has a hollow body.
Embodiment 10: Fuel assembly according to any one of the previous embodiments 8 or 9, wherein the material to be activated (56) is sintered, casted and/or alloyed.
Embodiment 11: Fuel assembly according to any one of the previous embodiments 8 to 10, wherein the outer shape of the material to be activated (56) has a star-shape in a plane orthogonal to the longitudinal axis (Z) of the container.
Embodiment 12: Fuel assembly according to any one of the previous embodiments, wherein the material to be activated (56) is Cobalt, Strontium-90, and/or Iodine.
Embodiment 13: Fuel assembly according to any one of the preceding embodiments 8 to 12, further comprising at least one intermediate element (68, 68a-d), the intermediate element (68, 68a-d) having an outer diameter being greater or smaller than the diameter of the one or more containers (38), wherein the at least one intermediate element (68, 68a-d) is arranged between two adjacent containers (38) and/or wherein at least one intermediate element (68, 68a) is arrangement between the damping element and the closest container (38) towards the damping element (36, 82).
Embodiment 14: Fuel assembly according to embodiment 13, wherein the fuel assembly comprises at least two groups of containers, wherein at least one group of containers is arranged between two intermediate elements (68, 68a-d), wherein each group (88a-d) of containers (38) comprises a plurality of containers.
Embodiment 15: Fuel assembly according to any one of the preceding embodiments 8 to 13, wherein the damping element (36, 36a, 36b), in particular an upper end (86) of the damping element (36, 36a, 36b, 82), has an outer diameter being greater than the external diameter of the one or more containers (38).
Embodiment 16: Fuel assembly according to one of the preceding embodiments, wherein the hollow rod (9, 9a, 9b, 80) is perforated at its circumference (44a, 44b).
Embodiment 17: Method for activating a material to be activated (56) in a nuclear reactor, comprising the following steps
   - providing a fuel assembly (1) for a nuclear power plant, the fuel assembly (1) comprising at least one hollow rod (9, 9a,9b, 80), the hollow rod being a control rod guide tube (9, 9a,9b, 80) of the fuel assembly (1) for the control rod assembly or an instrumentation tube;
   - providing a plurality of containers (38) with material to be activated (56);
   - inserting (1000) one or more damping elements into the hollow rod (9, 9a,9b, 80);
   - inserting (1010) one or more containers (38) with material to be activated (56) into the hollow rod (9, 9a, 9b, 80);
   - closing the hollow rod (9, 9a, 9b) at its upper end (30);
   - loading (1020) the fuel assembly (1) into a nuclear reactor vessel; and
   - operating the nuclear reactor for a predetermined time.
Embodiment 18: Method for activating a material to be activated (56) according to embodiment 17, wherein the containers (38) are filled into the hollow rod one after the other independently from each other.
Embodiment 19: Method according to embodiment 17 or 18, further comprising inserting into the hollow rod (9, 9a, 9b, 80) at least one intermediate element (68, 68a-d), the intermediate element (68, 68a-d) having an outer diameter being greater or smaller than the diameter of the one or more containers (38), wherein the at least one intermediate element (68, 68b-d) is inserted between two containers (38) and/or wherein at least one intermediate element (68, 68a) is inserted before the first container (38).
Embodiment 20: Method according to embodiment 19, wherein between two intermediate elements (68, 68a-d) a plurality of containers are inserted into the hollow rod (9, 9a, 9b, 80).
Embodiment 21: Method for activating a material to be activated (56) according to one of the embodiments 17 or 20, further comprising:
   removing (1030) the fuel assembles from the nuclear reactor vessel; and
   discharging (1040) the containers from the hollow rod (9, 9a,9b, 80) by pushing the containers (38) out of the hollow rod (9, 9a,9b, 80), turning the fuel assembly (1) upside down, and/or by using a gripper, wherein, in particular, the gripper attaches to one of the intermediate elements and/or the damping element in order to pull out of the hollow rod (9; 9a; 9b,80) the containers (36) arranged above the intermediate element or damping element to which the gripper is attached.
Embodiment 22: Method according to embodiment 21, wherein the gripper attaches to the intermediate elements (68, 68a-d) by a friction fit, wherein, in particular, when the gripper is inserted in the hollow rod (9, 9a,9b, 80) the gripper (60) is rotated about its longitudinal axis Y.
Embodiment 23: Gripper for pulling out one or more elements out of a hollow rod of a fuel assembly (1), the gripper comprising:
   a tube (62, 120) with a distal end (64, 124) and a proximal end (66, 122), wherein the proximal end (66, 122) is adapted to be connected to a manipulator arm, wherein the distal end (64, 124) comprises an opening area (128) forming a plane (D) being oblique with respect to a plane (P) orthogonal to the longitudinal axis (Y) of the tube (62, 120), wherein the tube (62, 120) is further provided with at least one rectilinear slit extending in longitudinal direction of the tube (62, 120).
Embodiment 24: Gripper according to claim 23, further comprising a pusher (74), the pusher being arranged within the tube (62) and movable along the longitudinal axis (Y) of the tube (62), wherein the pusher is adapted to release the elements by pushing them out of the distal end of the tube (62, 120) .
Embodiment 25: Gripper according to one of the preceding embodiments 23 to 24, wherein the at least one slit (70, 130) extends from the opening area (128), in particular from a position at the opening area (128) that is the closest to the proximal end (122) of the tube (120).
Embodiment 26: Gripper according to one of the preceding embodiments 23 to 25, wherein the slit has a length of between 5mm to 200mm, in particular between 20mm and 80mm, for example about 40mm.
Embodiment 27: Gripper according to one of the preceding embodiments 23 to 26, wherein the opening area (128) at the distal end (124) forming the plane (D) has an angle α of between 10 and 60 degrees with respect to the plane (P) orthogonal to the longitudinal axis (Y) of the tube, in particular between 12 and 18 degrees.
Embodiment 28: Method for pulling out one or more elements out of a hollow rod of a fuel assembly with a gripper according to one of the embodiments 23 to 27, the method comprising:
   inserting the gripper into the hollow rod comprising the one or more elements;
   rotating the gripper about its longitudinal axis (Y), in particular when the gripper hits one of the one or more elements; and
   pulling the gripper out of the hollow rod.
Embodiment 29: Method for pulling out one or more elements according to embodiment 28, wherein the gripper is rotated about its longitudinal axis Y, in particular when the gripper hits the lowest one of the one or more elements.
Embodiment 30: Method for pulling out one or more elements according to embodiment 28, further comprising pushing the one or more elements out of the gripper by a pusher being arranged within the tube of the gripper.

### List of reference signs

1 fuel assembly
3 bottom end piece
5 top end piece
7 fuel rod
9 control rod guide tubes
9a, 9b rod of a fuel assembly
20 flow restrictor
22 coupling piece
24 plate
26 arm
28 fingers
30 upper end
32 lower end
34, 34a, 34b bottom
36, 36a, 36b damping element
38 container
40 opening
42 opening
44a, 44b circumference
46 outer tube
48,50 end
52, 54 cap
56 material to be activated
60 gripper
62 tube
64 distal end
66 proximal end
68, 68a, 68b, 68c, 68d, 68e intermediate elements
70 slit
72 tip
74 pusher
80 hollow rod
82 pedestal or damping element
84 bottom of hollow rod
85 upper end
86 upper end
88a, 88b, 88c, 88d group of containers
90 top damping element
92 finger
120 tube
122 proximal end
124 distal end
126 intermediate portion
128 opening area
130 slit
X Longitudinal axis of fuel assembly
Z Longitudinal axis of hollow rod
Y Longitudinal axis of gripper

## Claims

1. Gripper for pulling out one or more elements out of a hollow rod of a fuel assembly (1), the gripper comprising:
a tube (62, 120) with a distal end (64, 124) and a proximal end (66, 122), wherein the proximal end (66, 122) is adapted to be connected to a manipulator arm, wherein the distal end (64, 124) comprises an opening area (128) forming a plane (D) being oblique with respect to a plane (P) orthogonal to the longitudinal axis (Y) of the tube (62, 120), wherein the opening area enables that a cylindrical device may enter the tube (62, 120) in direction of the longitudinal axis (Y), wherein the tube (62, 120) is further provided with at least one rectilinear slit extending in longitudinal direction of the tube (62, 120).

2. Gripper according to claim 1, further comprising a pusher (74), the pusher being arranged within the tube (62) and movable along the longitudinal axis (Y) of the tube (62), wherein the pusher is adapted to release the elements by pushing them out of the distal end of the tube (62, 120) .

3. Gripper according to one of the preceding claims 1 to 2, wherein the at least one slit (70, 130) extends from the opening area (128), in particular from a position at the opening area (128) that is the closest to the proximal end (122) of the tube (120).

4. Gripper according to one of the preceding claims 1 to 3, wherein the slit has a length of between 5mm to 200mm, in particular between 20mm and 80mm, for example about 40mm.

5. Gripper according to one of the preceding claims 1 to 4, wherein the opening area (128) at the distal end (124) forming the plane (D) has an angle α of between 10 and 60 degrees with respect to the plane (P) orthogonal to the longitudinal axis (Y) of the tube, in particular between 12 and 18 degrees.

6. Method for pulling out one or more elements out of a hollow rod of a fuel assembly with a gripper according to one of the claims 1 to 5, the method comprising:
inserting the gripper into the hollow rod comprising the one or more elements;
rotating the gripper about its longitudinal axis (Y), in particular when the gripper hits one of the one or more elements; and
pulling the gripper out of the hollow rod.

7. Method for pulling out one or more elements according to claim 6, wherein the gripper is rotated about its longitudinal axis Y, in particular when the gripper hits the lowest one of the one or more elements.

8. Method for pulling out one or more elements according to claim 6, further comprising pushing the one or more elements out of the gripper by a pusher being arranged within the tube of the gripper.
